# EUROPÄISCHE PATENTSCHRIFT

(11) **EP 1 855 880 B1**
(45) Veröffentlichungstag und Bekanntmachung des Hinweises auf die Patenterteilung: **11.04.2012**
(21) Anmeldenummer: 06724857.5
(22) Anmeldetag: 21.02.2006
(51) Int. Cl.: B32B 27/08, B32B 27/30, B32B 27/40, B29C 45/16, B29C 59/14

(54) **ARTIKEL ENTHALTEND POLYSTYROL UND THERMOPLASTISCHES POLYURETHAN**
ARTICLE COMPRISING POLYSTYRENE AND THERMOPLASTIC POLYURETHANE
ARTICLE CONTENANT DU POLYSTYRENE ET DU POLYURETHANNE THERMOPLASTIQUE

(30) Priorität: 22.02.2005 DE 102005008260
(43) Veröffentlichungstag der Anmeldung: 21.11.2007
(73) Patentinhaber: BASF SE, 67056 Ludwigshafen (DE)
(72) Erfinder: HILMER, Klaus, 49448 Brockum (DE); HOFFMANN, Leo, 90766 Fürth (DE)
(86) Internationale Anmeldenummer: PCT/EP2006/060147
(87) Internationale Veröffentlichungsnummer: WO 2006/089892

(56) Entgegenhaltungen:
- EP-A- 0 355 001
- EP-A- 1 036 651
- DE-A1- 10 308 989
- US-A- 4 816 313
- US-A- 6 013 153
- US-A1- 2002 109 263

## Beschreibung

Die Erfindung betrifft Artikel enthaltend ohne chemischen Haftvermittler haftend verbunden thermoplastisches Polyurethan und Polystyrol, bevorzugt Artikel enthaltend Artikel auf der Basis von thermoplastischem Polyurethan haftend verbunden mit Artikel auf der Basis von Polystyrol. "Ohne chemischen Haftvermittler" bedeutet dabei, dass zwischen dem thermoplastischen Polyurethan und dem Polystyrol keine weitere Komponente (Haftvermittler), d.h. keine Komponente, die sich von dem Polystyrol und dem thermoplastischen Polyurethan unterscheidet, insbesondere kein Klebstoff vorliegt. In dem erfindungsgemäßen Artikel liegen die Komponenten Polystyrol und thermoplastisches Polyurethan getrennt, aber haftend miteinander verbunden vor. Die erfindungsgemäßen Artikel basieren somit nicht auf einer Mischung enthaltend Polystyrol und thermoplastisches Polyurethan. Des weiteren bezieht sich die Erfindung auf Verfahren zur Herstellung eines Artikels enthaltend thermoplastisches Polyurethan und Polystyrol, wobei man die Oberfläche eines Polystyrolartikels plasmabehandelt und anschließend das thermoplastische Polyurethan bevorzugt in geschmolzenem Zustand mit der plasmabehandelten Oberfläche in Kontakt bringt, bevorzugt mittels Spritzguss anspritzt. Außerdem betrifft die Erfindung derart erhältliche Artikel enthaltend thermoplastisches Polyurethan und Polystyrol.

Thermoplastische Kunststoffe sind Kunststoffe, die, wenn es in dem für den Werkstoff für Verarbeitung und Anwendung typischen Temperaturbereich wiederholt erwärmt und abgekühlt wird, thermoplastisch bleiben. Unter thermoplastisch wird die Eigenschaft eines Kunststoffes verstanden, in einem für ihn typischen Temperaturbereich wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein. Thermoplastische Kunststoffe sind in der Technik weit verbreitet und finden sich in der Form von Fasern, Platten, Folien, Formkörpem, Flaschen, Ummantelungen, Verpackungen usw.

Für viele Anwendungen ist es wünschenswert, verschiedene thermoplastische Kunststoffe in einem Artikel zu kombinieren. Gründe hierfür ergeben sich durch die unterschiedlichen Anforderungen, die an die Oberfläche z.B. bezüglich der Haptik und Optik auf der einen Seite und andererseits an die Festigkeit oder Steifigkeit sowie Funktionalität (Dichtungen) des Artikels gegeben sind. Zur haftenden Kombination verschiedener thermoplastischer Kunststoffe ist es dabei bekannt, im Mehrkomponenten-, z.B. Zweikomponentenspritzguss (≥ 2-K Spritzguss) verschiedene Kunststoffe durch direktes Anspritzen haftend miteinander zu verbinden. Zur Haftvermittlung wurde hierzu in DE-B 103 08 727, DE-A 103 08 989 sowie von Simon Amesöder et al., Kunststoffe 9/2003, Seiten 124 bis 129 für bestimmte Materialkombinationen empfohlen, die Oberfläche Seiten 124 bis 129 für bestimmte Materialkombinationen empfohlen, die Oberfläche der einen Komponente mit Plasma zu behandeln und anschließend die andere Komponente an diese plasmabehandelte Oberfläche anzuspritzen.

Nachteilig an den bisher bekannten technischen Lehren sind die für viele Anwendungen unbefriedigenden Materialkombinationen. So stellen gerade Materialkombinationen, bei denen ein fester, steifer und möglichst kostengünstiger Träger mit einer bezüglich Haptik, Optik, Funktion und bevorzugt auch Abriebbeständigkeitfestigkeit optimierten Oberfläche versehen wird, besonders interessante und wünschenswerte Kombinationen dar.

Aufgabe der vorliegenden Erfindung war es somit, eine haftende Materialkombination zu entwickeln, bei der ein möglichst günstiger Träger, der bevorzugt sehr gute mechanische Eigenschaften aufweist, insbesondere eine hohe Abriebbeständigkeit besitzt, mit einem Material haftend verbunden wird, das über eine sehr gute Haptik, Optik und bevorzugt auch Kratzfestigkeit verfügt. Dabei sollte sich das Verbundelement durch eine effiziente und effektive Fertigung sowie eine möglichst gute Haftung auch ohne den Einsatz von Haftvermittlern auszeichnen.

Diese Aufgaben konnten durch die eingangs dargestellten Artikel gelöst werden.

Die erfindungsgemäßen Artikel zeichnen sich dadurch aus, dass ein als Trägermaterial ausgezeichnet geeigneter thermoplastisch verarbeitbarer Kunststoff, d.h. das Polystyrol, mit einem in Optik und Haptik sehr edlem thermoplastischen Kunststoff, hier thermoplastisches Polyurethan direkt haftend verbunden wird. Ein derartiges Verbundelement zwischen Polystyrol und thermoplastischem Polyurethan war bislang nicht bekannt und insbesondere ohne chemischen Haftvermittler nicht zugänglich. Diese Materialkombination eröffnet gerade durch ihren direkten haftenden Verbund, d.h. ohne Verwendung von chemischen Haftvermittlern, Lösungsmitteln, insbesondere Klebstoffen für viele Anwendungen neue, bislang nicht bekannte qualitative Veredelungsmöglichkeiten. Bevorzugt sind als Artikel erfindungsgemäß Abdeckungen mit Dichtungen, Gehäuse mit Dichtungen, Griffe, Schaltknäufe, Abdeckungen und Leisten mit angespritztem Klapperschutz, Gehäuse mit Schag-, Stoß- und Verschleißschutz (Staubsaugergehäuse mit Stoßkannte, Rasenmähergehäuse). Gerade bei diesen Artikeln kann man gemäß der vorliegenden Erfindung mit Polystyrol einen bezüglich seiner mechanischen Eigenschaften sehr gut als Trägermaterial geeigneten thermoplastischen Kunststoff mit thermoplastischem Polyurethan auf der Oberfläche "veredeln", und dies erfindungsgemäß, ohne chemische Haftvermittler und/oder Lösungsmittel und damit aufwendige weitere Schritte einzusetzen. Dabei bietet thermoplastisches Polyurethan den Vorteil einer edlen Haptik, wobei zudem eine optisch aufwändige Oberflächen darstellbar ist, weil TPU eine sehr gute Abbildungsleistung von Werkzeugoberflächen hat. TPU zeichnet sich weiterhin durch eine sehr geringe Oberflächenverschmutzung aus und kann farblich über Farbkonzentrate in weiten Bereichen variiert werden. Bevorzugt sind deshalb erfindungsgemäß Artikel, bei denen das thermoplastische Polyurethan die sichtbare Oberfläche darstellt.

Bevorzugt handelt es sich bei den erfindungsgemäßen Artikeln um einen Mehrkomponenten-, bevorzugt Zweikomponentenspritzgussartikel, d.h. Artikel, die im Mehrkomponentenspritzguss, bevorzugt Zweikomponentenspritzguss hergestellt werden. Zweikomponentenspritzguss ist für andere Materialkombinationen allgemein bekannt und vielfältig beschrieben. Üblicherweise wird eine Komponenten in ein Formwerkzeug gespritzt und anschließend die zweite Komponenten angespritzt. Das Einlegen einer Komponente, bevorzugt eines Artikels auf Basis Polystyrol, in ein Werkzeug und anschließendes Spritzgießen an die mit Plasma behandelte Oberfläche des Polypropylenartikels kann alternativ durchgeführt werden.

Als erfindungsgemäßes thermoplastisches Polyurethan ist bevorzugt ein thermoplastisches Polyurethan mit einer Shore-Härte von 45 A bis 80 A, einer Zugfestigkeit nach DIN 53504 von größer 15 MPa, einer Weiterreißfestigkeit nach DIN 53515 von größer 30 N/mm und einem Abrieb nach DIN 53516 von kleiner 250 mm³.

Die erfindungsgemäßen Artikel zeichnen sich insbesondere auch durch die ausgezeichnete Haftung zwischen dem Polystyrol und den thermoplastischen Polyurethan aus. Bevorzugt sind deshalb insbesondere auch Artikel, bei denen der Schälwiderstand nach DIN DIN EN 1464 mindestens 1 N/mm, bevorzugt mindestens 2 N/mm beträgt.

Eine weitere Aufgabe bestand darin, ein möglichst effizientes und effektives Verfahren zu entwickeln, mit dem die eingangs dargestellten Artikel herstellbar sind, insbesondere mit einfachen Mitteln der haftende Verbund erreicht werden kann.

Diese Aufgabe konnte durch Verfahren zur Herstellung eines Artikels enthaltend thermoplastisches Polyurethan und Polystyrol, bevorzugt Artikel enthaltend ohne chemischen Haftvermittler haftend verbunden thermoplastisches Polyurethan und Polystyrol gelöst werden, wobei man die Oberfläche eines Polystyrolartikels plasmabehandelt und anschließend das thermoplastische Polyurethan, bevorzugt in geschmolzenem Zustand, mit der plasmabehandelten Oberfläche in Kontakt bringt, bevorzugt mittels Spritzguss anspritzt. Besonders bevorzugt wird somit die zweite Komponente mittels Spritzguss auf die plasmabehandelte Oberfläche der ersten Komponenten aufgetragen, insbesondere angespritzt.

Durch dieses erfindungsgemäße Verfahren ist es erstmals möglich, ohne chemische Haftvermittler einen haftenden Verbund zwischen Polystyrol und thermoplastischem Polyurethan zu erreichen. Dass diese zugleich mittels eines effektiven und effizienten Verfahrens erreicht wird, ist von zusätzlichem Vorteil. Dabei ist das erfindungsgemäße Verfahren, d.h. die Haftvermittlung mittels Plasmabehandlung, in allgemein bekannten Verfahren zur thermoplastischen Verarbeitung von Kunststoffen einsetzbar. So kann die Plasmabehandlung beispielsweise auf der Oberfläche einer extrudierten Kunststofffolie angewendet werden, auf die anschließend der andere Kunststoff aufextrudiert oder bevorzugt mittels Spritzguss angespritzt wird. Außerdem ist es möglich, den einen Kunststoff, bevorzugt das Polystyrol, als Formkörper in eine Spritzgussform einzulegen, mit Plasma zu behandeln und anschließend den anderen Kunststoff, bevorzugt das thermoplastische Polyurethan an die mit Plasma behandelte Oberfläche anzuspritzen. Bevorzugt wird man die Oberfläche des Polystyrols plasmabehandeln und anschließend thermoplastisches Polyurethan mittels Spritzguss auf die plasmabehandelte Oberfläche des Polystyrols auftragen, bevorzugt anspritzen.

Besonders bevorzugt ist der Zweikomponentenspritzguss, wobei man im Zweikomponentenspritzguss bevorzugt in einem einzigen Spritzgusswerkzeug in einem ersten Schritt mit Polystyrol einen ersten Spritzkörper herstellt, anschließend die Oberfläche dieses ersten Spritzkörpers plasmabehandelt und danach thermoplastisches Polyurethan mittels Spritzguss auf die plasmabehandelte Oberfläche des ersten Spritzkörpers aufträgt, bevorzugt anspritzt. Spritzgießen ebenso das Mehrkomkonentenspritzgießen im Direktverfahren sowie auch im Einlegeverfahren, bei dem ein Artikel in ein Spritzgusswerkzeug eingelegt wird, ist allgemein bekannt.

Die Plasmabehandlung ist allgemein bekannt und beispielsweise in den eingangs zitierten Schriften dargestellt. Apparaturen zur Plasmabehandlung sind beispielsweise bei Plasmatreat GmbH, Bisamweg 10, 33803 Steinhagen sowie TIGRES Dr. Gerstenberg GmbH, Mühlenstraße 12, 25462 Rellingen erhältlich.

Bevorzugt wird man in einer Plasmaquelle mittels Hochspannungsentladung ein Plasma erzeugen, dieses Plasma mittels einer Plasmadüse mit der Oberfläche der einen Komponente, bevorzugt des Polystyrols in Kontakt bringen und die Plasmaquelle in einem Abstand zwischen 2 mm und 25 mm mit einer Geschwindigkeit zwischen 0,1 m/min und 400 m/min, bevorzugt zwischen 0,1 m/min und 200 m/min, besonders bevorzugt zwischen 0,2 m/min und 50 m/min relativ zur Oberfläche der Komponente bewegen, die plasmabehandelt wird. Das Plasma wird man bevorzugt durch eine Gasströmung entlang der Entladungsstrecke auf die Oberfläche des zu behandelnden thermoplastischen Kunststoffs transportieren. Als aktivierte Teilchen des Plasmas, die die Oberfläche des Kunststoffs zur Haftung vorbereiten, sind insbesondere Ionen, Elektronen, Radikale und Photonen zu nennen. Die Plasmabehandlung dauert bevorzugt zwischen 1 ms und 100 s. Als Gase können Sauerstoff, Stickstoff, Kohlendioxid und Gemische aus den vorgenannten Gasen, bevorzugt Luft, insbesondere Druckluft eingesetzt werden. Der Gasfluss kann bis 2 m³/h pro Düse betragen. Die Arbeitsfrequenz kann zwischen 10 und 30 kHz betragen. Die Anregungsspannung bzw. die Elektrodenspannung kann zwischen 5 und 10 kV betragen. Es kommen stehende oder rotierende Plasmadüsen in Betracht. Oberflächentemperatur des Bauteils kann zwischen 5°C und 250°C, bevorzugt zwischen 5°C und 200°C betragen.

Das Spritzgießen von thermoplastischen Kunststoffen ist allgemein bekannt und insbesondere auch für Polystyrol und thermoplastisches Polyurethan vielfältig beschrieben. So ist das Prinzip des Zweikomponenten (2-K-) Spritzguss in der Abbildung 2 in Simon Amesöder et al., Kunststoffe 9/2003, Seiten 124 bis 129 dargestellt.

Die Temperatur beim Spritzgießen von thermoplastischem Polyurethan beträgt dabei bevorzugt zwischen 140 und 250°C, besonders bevorzugt zwischen 160 und 230°C. TPU werden bevorzugt möglichst schonend verarbeitet. Die Temperaturen können je nach Härte angepasst werden. Die Umfangsgeschwindigkeit beim Plastifiziern liegt bevorzugt kleiner oder gleich 0,2 m/s, der Staudruck beträgt bevorzugt zwischen 30 bis 200 bar. Die Einspritzgeschwindigkeit ist bevorzugt möglichst gering um Scherbeanspruchung gering zu halten. Die Kühlzeit ist bevorzugt ausreichend lang zu wählen, wobei der Nachdruck bevorzugt 30 zwischen 80 % des Einspritzdruckes beträgt. Die Formen werden bevorzugt auf zwischen 30 und 70°C temperiert. Der Anguss wird bevorzugt an der stärksten Stelle des Bauteils gewählt. Bei flächigen Überspritzungen kann eine Anspritzpunkte-Kaskade eingesetzbar werden.

Die Temperatur beim Spritzgießen von Polystyrol beträgt bevorzugt zwischen 200 und 280°C, besonders bevorzugt zwischen 200 und 260°C. Die eingestellten Maschinentemperaturen können bevorzugt zwischen 210 und 280°C liegen, der Einzug bevorzugt bei 30-50°C. Der Einspritzdruck ist üblicherweise bei 600-1600 bar. Der Nachdruck wird bevorzugt bei 30-60% des Einspritzdruckes gehalten. Plastifiziert wird bevorzugt mit bis zu 1,3 m/s Umfangsgeschwindigkeit der Schnecke, kann besonders bevorzugt jedoch nur so schnell durchgeführt werden, dass während der Abkühlzeit der Plastifiziervorgang beendet ist. Der zu verwendende Staudruck kann bevorzugt zwischen 50 und 150 bar betragen. Der Anguss kann bevorzugt an der stärksten Stelle des Bauteils erfolgen.

Zu den beiden Komponenten Polystyrol und thermoplastisches Polyurethan kann beispielhaft folgendes ausgeführt werden.

Als Polystyrol kann allgemein bekanntes Polystyrol eingesetzt werden. Polystyrol ist beispielsweise beschrieben in Römpp Chemie Lexikon, 9. Auflage, Seite 3570 ff., Georg Thieme Verlag, Stuttgart. Dabei kommen insbesondere Polymere in Betracht, die die folgende Struktureinheit aufweisen: -[CH(C₆H₅)-CH₂]ₙ-, wobei n derart gewählt wird, dass das Polymer eine Molmasse, gewichtsmittlere Molmasse, von zwischen 170000 g/mol und 1000000 g/mol aufweist.

Zudem kommen als Polystyrol auch Mischungen in Frage, die Polystyrol beispielsweise zusammen mit anderen thermoplastischen Kunststoffen enthaltend, bevorzugt Mischungen, bei denen der Gehalt an Polystyrol mindestens 50 Gew.%, besonders bevorzugt mindestens 90 Gew.%, insbesondere 100 Gew.-% beträgt.

Polystryol sind Polymere, die die folgende Struktureinheit aufweisen. -[CH(C₆H₅)-CH₂]ₙ-, wobei n derart gewählt wird, dass das Polymer eine Molmasse, gewichtsmittlere Molmasse, von zwischen 170000 g/mol und 1000000 g/mol aufweist.

Thermoplastische Polyurethane, in dieser Schrift auch als TPU bezeichnet, und Verfahren zu ihrer Herstellung sind allgemein bekannt. Im allgemeinen werden TPUs durch Umsetzung von (a) Isocyanaten mit (b) gegenüber Isocyanaten reaktiven Verbindungen, üblicherweise mit einem Molekulargewicht (M_{w}) von 500 bis 10000, bevorzugt 500 bis 5000, besonders bevorzugt 800 bis 3000 und (c) Kettenverlängerungsmitteln mit einem Molekulargewicht von 50 bis 499 gegebenenfalls in Gegenwart von (d) Katalysatoren und/oder (e) üblichen Zusatzstoffen hergestellt.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielswelse Tri-, Tetra-, Penta-, Hexa-, Hepta- und/oder Oktamethylendiisocyanat, 2-Methyl-pentamethylen-diisocyanat-1,5, 2-Ethyl-butylen-diisocyanate1,4, Pentamethylen-diisocyanat-1,5, Butylen-diisocyanat-1,4, 1-Isocyanato-3,3,5-trimethyl-5-isocyanato-methyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-di-isocyanat und/oder 4,4'-, 2,4'- und 2,2'-Dicyclohexylmethan-diisocyanat, 2,2'-, 2,4'-und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Bevorzugt wird 4,4'-MDI verwendet. Für powder-slush-Anwendungen sind, wie eingangs dargestellt auch aliphatische Isocyanate bevorzugt, besonders bevorzugt 1-Isocyanato-3,3,5-trimethyl-5-isocyanato-methylcyclohexan (isophoron-diisocyanat, IPDI) und/oder Hexamethylendiisocyanat (HDI), insbesondere Hexamethylendiisocyanat. Wie bereits eingangs dargestellt können als Isocyanat (a) auch Prepolymer eingesetzt werden, die frei Isocyanatgruppen aufweisen. Der NCO-Gehalt dieser Prepolymere beträgt bevorzugt zwischen 10 und 25 %. Die Prepolymere können den Vorteil bieten, dass aufgrund der Vorreaktion bei der Herstellung der Prepolymere eine geringere Reaktionszeit bei der Herstellung der TPU benötigt wird.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.

Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Weiterhin können Polybutadiendiole mit einer Molmasse von 500 - 10000 g/mol bevorzugt 1000-5000 g/mol, insbesondere 2000 - 3000 g/mol verwendet werden. TPU's welche unter der Verwendung dieser Polyole hergestellt wurden, können nach thermoplastischer Verarbeitung strahlenvernetzt werden. Dies führt z.B. zu einem besseren Abbrennverhalten.

Statt eines Polyols können auch Mischungen verschiedener Polyole eingesetzt werden.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Besonders bevorzugt handelt es sich bei den Komponenten a) bis c) um difunktionelle Verbindungen, d.h. Diisocyanate (a), difunktionelle Polyole, bevorzugt Polyetherole (b) und difunktionelle Kettenverlängerungsmittel, bevorzugt Diole.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Keimbildungsmittel, Gleit- und Entformungshilfen, Farbstoffe und Pigmente, Antioxidantien, z.B. gegen Hydrolyse, Licht, Hitze oder Verfärbung, anorganische und/oder organische-Füllstoffe, Flammschutzmittel, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Besonders bevorzugt enthält das thermoplastische Polyurethan in den erfindungsgemäßen Materialien Melamincyanurat, das als Flammschutzmittel wirkt. Bevorzugt wird Melamincyanurat in einer Menge zwischen 0,1 und 60 Gew.-%, besonders bevorzugt zwischen 5 und 40 Gew.%, insbesondere zwischen 15 und 25 Gew.-% eingesetzt, jeweils bezogen auf das Gesamtgewicht des TPU. Bevorzugt enthält das thermoplastische Polyurethan Triazol und/oder Triazolderivat und Antioxidantien in einer Menge von 0,1 bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für Sterisch gehinderte Phenole finden sich in Plastics Additive Handbook, 5th edition, H. Zweifel, ed, Hanser Publishers, München, 2001 ([1]), S.98-107 und S.116-121. Beispiele für Aromatische Amine finden sich in [1] S.107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse < 10000 g/mol bevorzugt < 3000 g/mol auf. Ferner besitzen sie bevorzugt einen Schmelzpunkt von kleiner 180°C. Weiterhin werden bevorzugt Antioxidantien verwendet, die amorph oder flüssig sind. Ebenfalls können als Komponente (i) auch Gemische von zwei oder mehr Antioxidantien verwendet werden.

Neben den genannten Komponenten a), b) und c) und gegebenenfalls d) und e) können auch Kettenregler, üblicherweise mit einem Molekulargewicht von 31 bis 3000, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Zur Einstellung der Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt wird als thermoplastisches Polyurethan weiches weichmacherfreies thermoplastisches Polyurethan bevorzugt mit einer Härte bis 90 Shore A insbesondere für Anwendungen im haptischen und optischen Bereich eingesetzt. In Verschleiß- und Stoßschutzanwendungen kommen alle TPU bis 80 Shore D in Frage. In hydrolyseempflindlichen Anwendungen sind Ether-TPU zu bevorzugen. In besonders lichtexponieten Anwendungen sind alliphatische TPU zu bevorzugen. Das thermoplastische Polyurethan weist bevorzugt ein zahlenmittleres Molekulargewicht von mindestens 40000 g/mol, besonders bevorzugt mindestens 80000 g/mol, insbesondere mindestens 120000 g/mol auf.

Besonders bevorzugt ist, dass das thermoplastische Polyurethan eine Shore-Härte von 45 A bis 80 A, eine Zugfestigkeit nach DIN 53504 von größer 15 MPa, eine Weiterreißfestigkeit nach DIN 53515 von größer 30 N/mm und einen Abrieb nach DIN 53516 von kleiner 250 mm³ aufweist.

Aufgrund ihrer besonders guten Haftung sind TPU gemäß der WO 03/014179 bevorzugt. Die nachfolgenden Ausführungen bis zu den Beispielen beziehen sich auf diese besonders bevorzugten TPU. Diese TPU haften besonders gut, da die Verarbeitungstemperaturen höher sind als bei anderen "klassischen" TPU mit vergleichbaren Härten und sich bei diesen Bedingungen die besten Haftfestigkeiten erzielen lassen. Diese besonders bevorzugten TPU sind bevorzugt erhältlich durch Umsetzung von (a) Isocyanaten mit (b1) Polyesterdiolen mit einem Schmelzpunkt größer 150°C, (b2) Polyetherdiolen und/oder Polyesterdiolen jeweils mit einem Schmelzpunkt kleiner 150°C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt. Besonders bevorzugt sind thermoplastische Polyurethane, bei denen die Polyesterdiole (b1), die bevorzugt ein Molekulargewicht von 1000 g/mol bis 5000 g/mol besitzen, die folgende Struktureinheit (I) aufweisen: 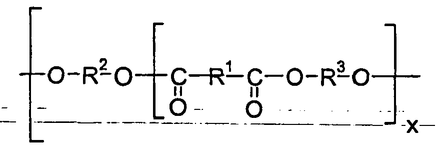 mit den folgenden Bedeutungen für R¹, R², und X:
- R¹:: Kohlenstoffgerüst mit 2 bis 15 Kohlenstoffatomen, bevorzugt eine Alkylengruppe mit 2 bis 15 Kohlenstoffatomen und/oder ein bivalenter aromatischer Rest mit 6 bis 15 Kohlenstoffatomen, besonders bevorzugt mit 6 bis 12 Kohlenstoffatomen
- R²:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂- und/oder -CH₂-CH₂-CH₂-CH₂-,
- R³:: gegebenenfalls verzweigtkettige Alkylengruppe mit 2 bis 8 Kohlenstoffatomen, bevorzugt 2 bis 6, besonders bevorzugt 2 bis 4 Kohlenstoffatomen, insbesondere -CH₂-CH₂- und/oder -CH₂-CH₂-CH₂-CH₂-,
- X:: eine ganze Zahl aus dem Bereich 5 bis 30. Der eingangs dargestellte bevorzugte Schmelzpunkt und/oder das bevorzugte Molekulargewicht beziehen sich bei dieser bevorzugten Ausführungsform auf die dargestellte Struktureinheit (I).

Unter dem Ausdruck "Schmelzpunkt" ist in dieser Schrift das Maximum des Schmelzpeaks einer Aufheizkurve zu verstehen, die mit einem handelsüblichen DSC-Gerät (z.B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man einen, bevorzugt hochmolekularen, bevorzugt teilkristallinen, thermoplastischen Polyester mit einem Diol (c) umsetzt und anschließend das Umsetzungsprodukt aus (i) enthaltend (b1) Polyesterdiol mit einem Schmelzpunkt größer 150°C sowie gegebenenfalls (c) Diol zusammen mit (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (ii) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (i) die Hartphasen durch den im Schritt (i) eingesetzten Polyester für das Endprodukt zur Verfügung gestellt werden, erfolgt durch den Einsatz der Komponente (b2) im Schritt (ii) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden PolyEsterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d.h. vor der Umsetzung (i) mit dem Diol (c), bevorzugt ein Molekulargewicht von 15000 g/mol bis 40000 g/mol sowie bevorzugt einen Schmelzpunkt von größer 160°C, besonders bevorzugt von 170°C bis 260°C auf.

Als Ausgangsprodukt, d.h. als Polyester, der in dem Schritt (i) bevorzugt in geschmolzenem Zustand besonders bevorzugt bei einer Temperatur von 230°C bis 280°C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise E-thandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich

Den thermoplastischen Polyester schmilzt man bevorzugt bei einer Temperatur von 180°C bis 270°C auf. Die Umsetzung (i) mit dem Diol (c) führt man bevorzugt bei einer Temperatur von 230°C bis 280°C, bevorzugt 240°C bis 280°C durch.

Als Diol (c) können in dem Schritt (i) zur Umsetzung mit dem thermoplastischen Polyester und gegebenenfalls im Schritt (ii) allgemein bekannte Diole mit einem Molekulargewicht von 62 bis 500 g/mol eingesetzt werden, beispielsweise die an späterer Stelle genannten, z.B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (i) beträgt üblicherweise 100 : 1,0 bis 100 : 10, bevorzugt 100 : 1,5 bis 100: 8,0.

Die Umsetzung des thermoplastischen Polyesters mit dem Diol (c) in dem Umsetzungsschritt (i) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (i) in Frage: Tetrabutylorthotitanat und/oder Zinn-(II)-Dioctoat, bevorzugt Zinn-dioctoat.

Das Polyesterdiol (b1) als Umsetzungsprodukt aus (i) weist bevorzugt ein Molekulargewicht von 1000 g/mol bis 5000 g/mol auf. Der Schmelzpunkt des Polyesterdiols als Umsetzungsprodukt aus (i) beträgt bevorzugt 150°C bis 260°C, insbesondere 165 bis 245°C, d.h. dass das Umsetzungsprodukt des thermoplastischen Polyesters mit dem Diol (c) im Schritt (i) Verbindungen mit dem genannten Schmelzpunkt enthält, die in dem anschließenden Schritt (ii) eingesetzt werden.

Durch die Umsetzung des thermoplastischen Polyesters mit dem Diol (c) in dem Schritt (i) wird die Polymerkette des Polyesters durch das Diol (c) durch Umesterung gespalten. Das Umsetzungsprodukt des TPU weist deshalb freie Hydroxylendgruppen auf und wird bevorzugt in dem weiteren Schritt (ii) zu dem eigentlichen Produkt, dem TPU, weiterverarbeitet.

Die Umsetzung des Reaktionsproduktes aus dem Schritt (i) in dem Schritt (ii) erfolgt bevorzugt durch Zugabe von a) Isocyanat (a) sowie (b2) Polyetherdiolen und/oder Polyesterdiolen jeweils mit einem Schmelzpunkt kleine 150°C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (i). Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 190 bis 250°C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d.h. späteren Gehäusen, nach der Zugabe der Komponenten (a) und (b2), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung in dem Schritt (ii) erfolgt bevorzugt bei einem Überschuss der Isocyanatgruppen zu den gegenüber Isocyanaten reaktiven Gruppen. Bevorzugt beträgt in der Umsetzung (ii) das Verhältnis der Isocyanatgruppen der zu den Hydroxylgruppen 1 : 1 bis 1,2 : 1, besonders bevorzugt 1,02 : 1 bis 1,2. 1.

Bevorzugt führt man die Umsetzungen (i) und (ii) in einem allgemein bekannten Reaktionsextruder durch. Derartige Reaktionsextruder sind beispielhaft in den Firmenschriften von Werner & Pfleiderer oder in der DE-A 2 302 564 beschrieben.

Bevorzugt wird das bevorzugte Verfahren derart durchgeführt, dass man in das erste Gehäuse eines Reaktionsextruders mindestens einen thermoplastischen Polyester, z.B. Polybutylenterephthalat, dosiert und bei Temperaturen bevorzugt zwischen 180°C bis 270°C, bevorzugt 240°C bis 270°C aufschmilzt, in ein nachfolgendes Gehäuse ein Diol (c), z.B. Butandiol, und bevorzugt einen Umesterungskatalysator zugibt, bei Temperaturen zwischen 240°C bis 280°C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 bis 250°C den Aufbau zu den bevorzugten thermoplastischen Polyurethanen durchführt.

Bevorzugt werden im Schritt (ii) mit Ausnahme der im Umsetzungsprodukt von (i) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze Üblicherweise mittels eine Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguss mit Zykluszeiten kleiner 35s verarbeitbar sind. Auch in der Extrusion, z.B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d.h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (i), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (i) bezogen sind.

Die bevorzugten thermoplastischen Polyurethane weisen bevorzugt eine Härte von Shore 45 A bis Shore 78 D, besonders bevorzugt 50 A bis 75 D auf.

Bevorzugt weisen die bevorzugten thermoplastischen Polyurethane die folgende Struktureinheit (II) auf: 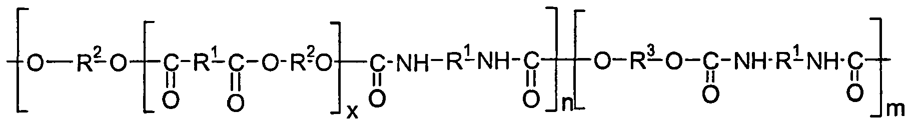 mit den folgenden Bedeutungen für R¹, R², R³ und X:
- R¹: Kohlenstoffgerüst mit 2-bis 15 Kohlenstoffatomen, bevorzugt eine Alkylengruppe mit 2 bis 15 Kohlenstoffatomen und/oder ein aromatischer Rest mit 6 bis 15 Kohlenstoffatomen,
- R²:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂- und/oder -CH₂-CH₂-CH₂-CH₂-,
- R³:: Rest, der sich aus durch den Einsatz von Polyetherdiolen und/oder Polyesterdiolen mit jeweils Molekulargewichten zwischen 501 g/mol und 8000 g/mol als (b2) oder durch den Einsatz von Alkandiolen mit 2 bis 12 Kohlenstoffatomen für die Umsetzung mit Diisocyanaten ergibt,
- X:: eine ganze Zahl aus dem Bereich 5 bis 30,
- n, m:: eine ganze Zahl aus dem Bereich 5 bis 20.

Der Rest R¹ wird durch das eingesetzte Isocyanat definiert, der Rest R² durch das Umsetzungsprodukt des thermoplastischen Polyesters mit dem Diol (c) in (i) und der Rest R³ durch die Ausgangskomponenten (b2) und gegebenenfalls (c) bei der Herstellung der TPU.

### Beispiele:

Es wurden im Zweikomponentenspritzguss Polystyrol PS 143E der BASF Aktiengesellschaft mit Elastollan® C 65 A 15 HPM miteinander verbunden. Der Verbund zeigte geringste bis keine Haftung. In einem zweiten Versuch wurde des PS143E Bauteil vor dem Anspritzen mit dem Elastollan® TPU einer Plasmabehandlung unterzogen und danach direkt das TPU angespritzt. Die Haftung an der plasmabehandelten Fläche ist dauerhaft so hoch, dass die Komponenten nicht zerstörungsfrei voneinander zu trennen sind.

## Patentansprüche

1. Artikel enthaltend ohne chemischen Haftvermittler haftend verbunden thermoplastisches Polyurethan und Polystyrol, das die folgende Struktureinheit aufweist:
-[CH(C₆H₅)-CH₂]ₙ.,
wobei n derart gewählt wird, dass das Polymer eine Molmasse, gewichtsmittlere Molmasse, von zwischen 170000 g/mol und 1000000 g/mol aufweist.

2. Artikel nach Anspruch 1, **dadurch gekennzeichnet, dass** es sich bei dem Artikel um einen Zweikomponentenspritzgussartikel handelt.

3. Artikel nach Anspruch 1, **dadurch gekennzeichnet, dass** das thermoplastische Polyurethan eine Shore-A Härte kleiner 95 aufweist und keine Weichmacher enthält.

4. Artikel nach Anspruch 1, **dadurch gekennzeichnet, dass** das thermoplastische Polyurethan die sichtbare Oberfläche darstellt.

5. Verfahren zur Herstellung eines Artikels enthaltend thermoplastisches Polyurethan und Polystyrol, **dadurch gekennzeichnet, dass** man die Oberfläche eines Polystyrolartikels plasmabehandelt, wobei das Polystyrol die folgende Struktureinheit aufweist: -[CH(C₆H₅)-CH₂]ₙ, wobei n derart gewählt wird, dass das Polymer eine Molmasse, gewichtsmittlere Molmasse, von zwischen 170000 g/mol und 1000000 g/mol aufweist und anschließend das thermoplastische Polyurethan mit der plasmabehandelten Oberfläche in Kontakt bringt.

6. Verfahren nach Anspruch 5, **dadurch gekennzeichnet, dass** man das thermoplastische Polyurethane mittels Spritzguss auf die plasmabehandelte Oberfläche des Polystyrols aufträgt.

7. Verfahren nach Anspruch 5, **dadurch gekennzeichnet, dass** man im Mehrkomponentenspritzguss, bevorzugt Zweikomponentenspritzguss in einem ersten Schritt mit Polystyrol einen ersten Spritzgussartikel herstellt, anschließend die Oberfläche dieses ersten Spritzkörpers plasmabehandelt und danach thermoplastisches Polyurethan mittels Spritzguss auf die plasmabehandelte Oberfläche des ersten Spritzgussartikels aufträgt.

8. Verfahren nach Anspruch 7, **dadurch gekennzeichnet, dass** man in einer Plasmaquelle mittels Hochspannungsentladung ein Plasma erzeugt, dieses Plasma mittels einer Plasmadüse mit der Oberfläche der einen Komponente, bevorzugt des Polystyrols in Kontakt bringt und die Plasmaquelle in einem Abstand zwischen 2 mm und 25 mm mit einer Geschwindigkeit zwischen 0,1 m/min und 400 m/min relativ zur Oberfläche der Komponente bewegt, die plasmabehandelt wird.

9. Verfahren nach Anspruch 5, **dadurch gekennzeichnet, dass** die Plasmabehandlung zwischen 1 ms und 100 s dauert.

10. Verfahren nach Anspruch 5. **dadurch gekennzeichnet, dass** das thermoplastische Polyurethan eine Shore-A Härte kleiner 95 aufweist und keine Weichmacher enthält.

11. Artikel enthaltend thermoplastisches Polyurethan und Polystyrol erhältlich durch ein Verfahren gemäß einem der Ansprüche 5 bis 10.

## Claims

1. An article comprising polystyrene which has the following structural unit:
-[CH(C₆H₅)-CH₂]ₙ,
where n is chosen such that the polymer has a molar mass, a weight-average molar mass, of between 170 000 g/mol and 1 000 000 g/mol, and thermoplastic polyurethane joined adheringly without chemical adhesion promoter.

2. The article according to claim 1, being a two-component injection-molded article.

3. The article according to claim 1, wherein the thermoplastic polyurethane has a Shore A hardness of less than 95 and comprises no plasticizers.

4. The article according to claim 1, wherein the thermoplastic polyurethane constitutes the visible surface.

5. A process for producing an article comprising thermoplastic polyurethane and polystyrene, which comprises plasma-treating the surface of a polystyrene article, where the polystyrene has the following structural unit: -[CH(C₆H₅)-CH₂]ₙ, where n is chosen such that the polymer has a molar mass, a weight-average molar mass, of between 170 000 g/mol and 1 000 000 g/mol, and then contacting the thermoplastic polyurethane with the plasma-treated surface.

6. The process according to claim 5, wherein the thermoplastic polyurethane is applied by injection molding to the plasma-treated surface of the polystyrene.

7. The process according to claim 5, wherein a first injection-molded article is produced in a first step with polystyrene by multicomponent injection molding, preferably two-component injection molding, then the surface of this first injection molding is plasma-treated, and thereafter thermoplastic polyurethane is applied by injection molding to the plasma-treated surface of the first injection-molded article.

8. The process according to claim 7, wherein high-voltage discharge is used to generate a plasma in a plasma source, said plasma is contacted by means of a plasma nozzle with the surface of one component, preferably the polystyrene, and the plasma source is moved at a distance of between 2 mm and 25 mm at a speed between 0.1 m/min and 400 m/min relative to the surface of the component being plasma-treated.

9. The process according to claim 5, wherein the plasma treatment lasts between 1 ms and 100 s.

10. The process according to claim 5, wherein the thermoplastic polyurethane has a Shore A hardness of less than 95 and comprises no plasticizers.

11. An article comprising thermoplastic polyurethane and polystyrene, obtainable by a process according to any one of claims 5 to 10.

## Revendications

1. Objet contenant, assemblés par adhérence sans promoteur d'adhérence chimique, du polyuréthane thermoplastique et du polystyrène présentant l'unité structurelle suivante : -[CH(C₆H₅)-CH₂]ₙ, n étant choisi de manière telle que le polymère présente une masse molaire, où il s'agit de la masse molaire moyenne pondérale, entre 170 000 g/mole et 1 000 000 g/mole.

2. Objet selon la revendication 1, **caractérisé en ce qu'**il s'agit, pour l'objet, d'un objet moulé par injection à deux composants.

3. Objet selon la revendication 1, **caractérisé en ce que** le polyuréthane thermoplastique présente une dureté Shore-A inférieure à 95 et ne contient pas de plastifiant.

4. Objet selon la revendication 1, **caractérisé en ce que** le polyuréthane thermoplastique représente la surface visible.

5. Procédé pour la préparation d'un objet contenant du polyuréthane thermoplastique et du polystyrène, **caractérisé en ce qu'**on traite la surface d'un objet en polystyrène au plasma, le polystyrène présentant l'unité structurelle suivante : -[CH(C₆H₅)-CH₂]ₙ, n étant choisi de manière telle que le polymère présente une masse molaire, où il s'agit de la masse molaire moyenne pondérale, entre 170 000 g/mole et 1 000 000 g/mole, puis on met le polyuréthane thermoplastique en contact avec la surface traitée au plasma.

6. Procédé selon la revendication 5, **caractérisé en ce qu'**on applique le polyuréthane thermoplastique par moulage par injection sur la surface traitée au plasma du polystyrène.

7. Procédé selon la revendication 5, **caractérisé en ce qu'**on fabrique, dans un moulage par injection à plusieurs composants, de préférence à deux composants, dans une première étape, avec du polystyrène, un premier objet moulé par injection, puis on traite la surface de ce premier corps moulé par injection au plasma puis on applique le polyuréthane thermoplastique par moulage par injection sur la surface traitée au plasma du premier objet moulé par injection.

8. Procédé selon la revendication 7, **caractérisé en ce qu'**on génère un plasma dans une source de plasma au moyen d'une décharge haute tension, on met en contact ce plasma au moyen d'un pulvérisateur de plasma avec la surface dudit un compostant, de préférence du polystyrène, et on déplace la source de plasma à une distance entre 2 mm et 25 mm à une vitesse entre 0,1 m/min et 400 m/min par rapport à la surface du composant qui est traité au plasma.

9. Procédé selon la revendication 5, **caractérisé en ce que** le traitement au plasma dure entre 1 ms et 100 s.

10. Procédé selon la revendication 5, **caractérisé en ce que** le polyuréthane thermoplastique présente une dureté Shore-A inférieure à 95 et ne contient pas de plastifiant.

11. Objet contenant du polyuréthane thermoplastique et du polystyrène, pouvant être obtenu par un procédé selon l'une quelconque des revendications 5 à 10.
